Europäisches Patentamt

European Patent Office

Office européen des brevets

(11) Publication number: **0 501 037 A2**

## EUROPEAN PATENT APPLICATION

(21) Application number: **91122018.4**

(22) Date of filing: **20.12.91**

(51) Int. Cl.⁵: **B29C 47/06**, B29C 47/00, B60J 10/02

(30) Priority: **28.02.91 JP 34675/91**

(43) Date of publication of application:
**02.09.92 Bulletin 92/36**

(84) Designated Contracting States:
**DE GB**

(71) Applicant: **KINUGAWA RUBBER IND. CO., LTD.**
**330, Naganuma-cho**
**Chiba-City, Chiba Prefecture(JP)**

(72) Inventor: **Miyama, Masayoshi, c/o Kinugawa**
**Rubber Ind.Co.Ltd.**
**No. 330, Naganuma-cho**
**Chiba City, Chiba Pref.(JP)**
Inventor: **Komori, Hiroki, c/o Kinugawa Rubber**
**Ind.Co.Ltd.**
**No. 330, Naganuma-cho**
**Chiba City, Chiba Pref.(JP)**

(74) Representative: **Weber, Joachim, Dr.**
**Hoefer, Schmitz, Weber, Patentanwälte**
**Ludwig-Ganghofer-Strasse 20**
**W-8022 Grünwald/München(DE)**

(54) Weatherstrip and a manufacturing process therefor.

(57) A weatherstrip has a body portion including integral seal members, and a layer of a reactive urethane hot melt resin composition. The reactive urethane hot melt resin composition comprises urethane prepolymer and an additive. The weatherstrip has high abrasion resistance. Further, a method of producing the weatherstrip comprises the steps of extruding elastomeric material for the weatherstrip, and supplying the reactive urethane hot melt resin composition and simultaneously applying same to a predetermined area of the extruded weatherstrip so that a layer of reactive urethane hot melt resin composition is formed thereon.

**FIG.2**

## BACKGROUND OF THE INVENTION

This invention relates to a weatherstrip for sealing a space between a movable window and a window frame for automobiles, and to a manufactureing process therefor.

It is generally known that weatherstripping, also referred to as glass run channel, is made of an elastomeric material and extruded into an elongated body having a substantially U-shaped cross section. The U-shaped glass run channel has a base and two opposing side walls extending from the base, which define an internal cavity for accomodating a periphery of a movable window. Flexible seal lips extend from tip ends of the side walls into the internal cavity defined by the base and sidewalls. A surface of each seal lip slidably contacts a leading edge of the window when the window is moved to the closed position. A partial surface of the glass run channel is formed with a flocked fabric in order to reduce frictional resistance of the glass run channel against sliding contact with the window. However, the provision of the flocked fabric on the glass run channel leads to increased manufacturing costs. In addition, there is a tendency for the flocked fabric to become disengaged from the glass run channel after repeated use, increasing frictional resistance of the window and the channel undesirably.

A Japanese Utility Model Application Second (examined) Publication No. 62-6883 published on Feb. 18, 1987 discloses another type of glass run channel, a partial surface of which has a resin layer instead of flocked fabric. A layer of polyolefine resin such as polyethylene, polypropylene and the like, is formed by thermal fusion on the glass run channel surface which contacts the window. Since the polyolefine resin is a low friction material, a frictional resistance of the glass run channel against sliding contact with the window is reduced.

However, in this known glass run channel, the polyolefine resin layer wears out in a relatively short period of use due to repeated sliding contact with the window, which results in exposure of the rubber substrate. Thus, again the frictional resistance between the glass run channel and the window is caused to increase. In addition, a manufacturing process for the disclosed glass run channel is complicated since the polyolefine resin needs to be dried after application in order to prevent remelting and removal from the rubber substrate surface during the molding process.

A Japanese Patent Application Second (examined) Publication No. 60-21655 published on May 29, 1985 discloses still another type of glass run channel which has a specific coating layer on a surface thereof. The coating material is prepared by mixing organic solvent with a mixture of urethane prepolymer, powdered fluorine-contained polymers and silicone oil and provides a low frictional resistance between the glass run channel and the window.

However, in the above-identified publication, the coating layer requires drying for several hours at room temperature heating for several minutes at 180°C in order to evaporate the organic solvent contained therein. Thus, the processing of the glass run channel is still complicated.

Meanwhile, in adhesive and/or coating field, there have been proposed various kinds of reactive urethane hot melt resin compositions. These compositions have both a high drying rate and suitable hardness which are the advantageous characteristics of both hot melt resin compositions and reactive resin compositions combined. Such hot melt resin compositions have been conventionally utilized as adhesive material on the basis of the high drying rate, but, they do not have sufficient resistance against heat and rigidity. On the other hand, reactive resin compositions with high hardness solidify at a low rate.

It is an object of the present invention is to provide a weatherstrip for sealing a space between a movable window and a window frame, for automobiles, which has low frictional resistance and high abrasion resistance.

Further, another object of the present invention is to provide a simplified manufacturing process of the weatherstrip.

## SUMMARY OF THE INVENTION

According to the present invention, there is provided a weatherstrip comprising a body portion and a layer of a reactive urethane hot melt resin composition. The body portion has integral seal members. The reactive urethane hot melt resin composition comprises urethane prepolymer containing isocyanate group and an additive comprising antioxidant and catalyst. Further, there is provided a method of producing a weatherstrip of elastomeric material by an extruder. The extruder has, at an end portion thereof, an inner die lip having a first orifice of a predetermmined configuration and an outer die lip having a second orifice larger than the first orifice of the inner die lip. The outer die lip has a passage communicating with the second orifice. The method comprises the steps of extruding the elastomeric material through the first orifice of the inner die lip, and supplying a reactive urethane hot melt resin composition through the passage into the second orifice of the outer die lip and thereby applying same to a predetermined area of the extruded weatherstrip so that a layer of the reactive urethane hot melt resin composition is formed thereon.

## BRIEF DESCRIPTION OF THE DRAWINGS

Fig. 1 is a side view of an automobile on which a weatherstrip according to the present invention is assembled;

Fig. 2 is a sectional view of a preferred embodiment of a weatherstrip for sealing a space between a movable window and a window frame of an automobile, according to the present invention;

Fig. 3 is a schematic diagram illustrating a manufacturing process of the weatherstrip of the invention;

Fig. 4 is a sectional view of an apparatus for manufacturing the weatherstrip of the invention, which includes die lips;

Fig. 5 is an enlarged sectional view of the die lips of Fig. 4; and

Fig. 6 is a schematic diagram illustrating an abrasion tester for evaluating abrasion resistance of the weatherstrip of the invention.

## DETAILED DESCRIPTION OF THE INVENTION

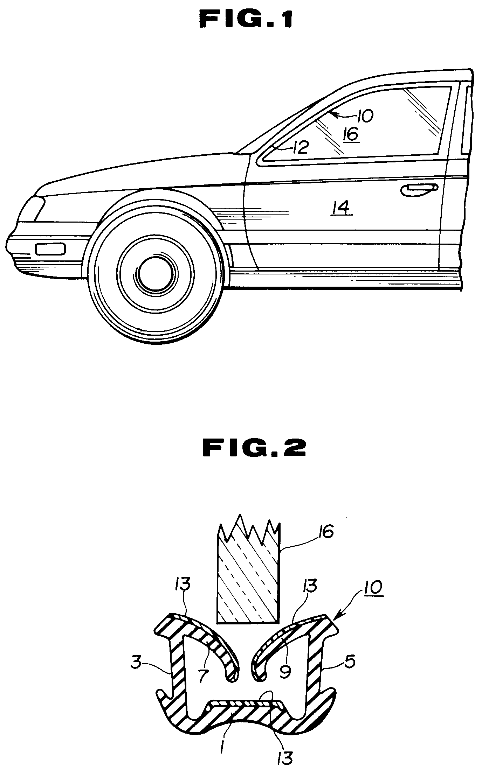

Referring to Figs. 1 and 2, a weatherstrip (glass run channel) of the present invention is shown and indicated by the numeral 10. The glass run channel 10 extends around the top and side of a window opening 12 in a door 14 of an automobile having a movable window 16. The glass run channel 10 has a base 1 and two opposing side walls 3 and 5 extending substantially upright from the base 1 so as to define an internal space in which the window 16 is accomodated when it moves to the closed position. The glass run channel 10 is made of a rubber material and integrally formed into an elongated body having a substantially U-shaped cross section. Two seal members 7 and 9 projectingly extend from tip ends of the side walls 3 and 5, inwardly into the internal space defined by the base 1 and the side walls 3 and 5. The seal members 7 and 9 have outer surfaces 13 slidably contacting the window 16 when a peripheral edge of the window 16 enters into the internal space of the glass run channel 10. On the surfaces 13 of the base 1 and the seal members 7 and 9, a layer of a reactive urethane hot melt resin composition is formed.

The reactive urethane hot melt resin composition comprises urethane prepolymer having isocyanate group and an additive, and preferably further comprises thermoplastic resin. The thermoplastic resin is at least one selected from a group consisting of polyethylene, ethylene vinyl acetate copolymer (EVA), polyester and polyamide. The additive comprises antioxidant and catalyst. Suitably, the thermoplastic resin is employed in an amount of up to 10 parts by weight, preferably up to 5 parts by weight, on the basis of 100 parts by weight of the uretane prepolymer. Suitably, the additive is employed in a range of 0.1 to 1 parts by weight, preferably 0.1 to 0.2 parts by weight, on the basis of 100 parts by weight of the uretane prepolymer. It is further preferred that the reactive urethane hot melt resin composition contains a fluorine-contained material in the form of powder or grease. Inclusion of such a fluorine-contained material highly improves abrasion resistance of the layer of the reactive urethane hot melt resin composition formed on the glass run channel.

Since the reactive urethane hot melt resin composition is of one component type and melts at a relatively low temperature (approximately 100°C), the reactive urethane hot melt resin composition is applicable to various types of processing carried out at the low temperature.

Further, upon solidification, the reactive urethane hot melt resin composition reacts with atmospheric moisture to form a urethane composition with high hardness. In addition, differing from other resin compositions containing organic solvents, the reactive urethane hot melt resin composition is not remelted or reactivated by heating after solidification, therefore an evaporation process for organic solvent contained therein is not required. Accordingly, during manufacture the glass run channel according to the present invention can dispense with a heat drying step after application of the reactive urethane hot melt resin composition to the rubber surface.

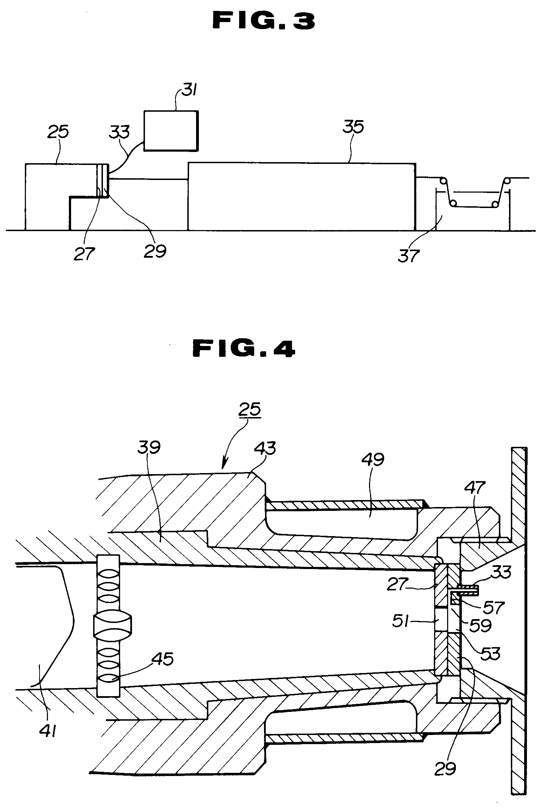

A method of producing a weatherstrip of a preferred embodiment according to the present invention will now be described with reference to the accompanying drawings. The method is performed by utilizing an improved die dip for an extruder. The detailed structure of the die lip is disclosed in a Japanese Patent Application First (unexamined) Publication No. 1-133711, published on May 25, 1989, contents of which are incorporated herein by reference for the sake of disclosure. As best shown in Figs. 3, 4 and 5, an extruder 25 includes a cylinder barrel 39 in which a screw 41 for kneading an elastomeric material and a breaker plate 45 for controlling a stream of the elastomeric material are mounted. An inside face of an inner die lip 27, of annular shape, is secured to an end of the cylinder barrel 39. An outside face of the inner die lip 27 abuts against an inside face of an outer die lip 29. The inner and outer die lips 27 and 29 are supported together at the end of the cylinder barrel 39 by a retainer member 47 disposed in contact with an outside face of the outer die lip 29. The inner die lip 27 has an orifice 51 which is formed into a predetermined shape in compliance with a configuration of a desired product such as a weatherstrip. To an outer periphery of the cylinder barrel 39 is fitted an extrusion head 43 having an annular heating chamber 49 where the elastomeric material is heated by steam or the like.

The outer die lip 29 has an orifice 53 which is larger in size than the orifice 51 of the inner die lip 27. An inner surface 53a of the orifice 53 and an inner surface 51a of the orifice 51 are not aligned in height, such that a gap is formed between the upper surface of an extruded article derived from the orifice 51 of the inner die lip 27 and the inner surface 53a of the orifice 53 of the outer die lip 29. On the inside face of the outer die lip 29 which contacts the inner die lip 27, is formed a feed path 57 having an inlet 55 communicated with an outlet 59. A diameter of the inlet 55 is larger than that of the outlet 59. The inlet 55 is connected to a feed tube 33 which is in turn connected to a device 31 which is a supply source of the reactive urethane hot melt resin composition. The outlet 59 is connected to the orifice 53. The elastomeric material fed through the screw 41 is transported through the orifice 51 toward the orifice 53. Simultaneously, the reactive urethane hot melt resin composition fed through the feed tube 33 passes through the feed path 57 toward the orifice 53. The reactive urethane hot melt resin composition which passes through the outlet 59 is transported to the gap formed between the upper surface of the extruded article derived from the orifice 53, and the inner surface 53a of the orifice 53 of the outer die lip 29. Thus, the reactive urethane hot melt resin composition is applied to the upper surface of the extruded article. After the application of the reactive urethane hot melt resin composition, the extruded article is delivered to a vulcanization tank 35 for vulcanization and further to a cooling tank 37 for cooling.

According to the method of producing the weatherstrip according to the present invention, extrusion of the weatherstrip and application of the reactive urethane hot melt resin composition to the weatherstrip are simultaneously performed. As compared with a conventional method of producing the weatherstrip which includes thermal fusion or spray coating of the reactive urethane hot melt resin composition, the method of the invention is considerably simplified. Further, by this method of application, that is, to a limited area of the weatherstrip, an amount of the reactive urethane hot melt resin composition to be applied is effectively conserved compared with the spray coating method of the conventional art.

Moreover, with the provision of the feed path 57, an amount of the reactive urethane hot melt resin composition fed by a pump (not shown) is controlled without influence of pulsation from the pump so that a uniform amount thereof is applied. Therefore, the layer of the reactive urethane hot melt resin composition is formed on the weatherstrip surface with a uniform thickness.

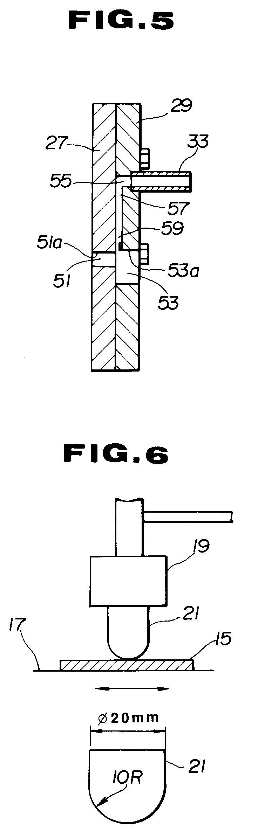

A general abrasion test procedure for the weatherstrips will now be described. As illustrated in Fig. 6, a sample 15 of the weatherstrip is placed on a table 17. The sample 15 has a rubber substrate on which a layer of the reactive urethane hot melt resin composition is formed. An abrasion tester 19 has an abrasive glass 21 depending therefrom vertically and downwardly. A spherical end of the abrasive glass 21 contacts a surface of the sample 15 and applies a constant load onto the sample 15. The sample 15 is reciprocally moved in the substantially horizontal direction under the constant load of the abrasive glass. When the layer of the reactive urethane hot melt resin composition is worn out and the rubber substrate is exposed, the total number of reciprocations is calculated. The spherical end of the abrasive glass 21 has a 20mm diameter and a 10R bending rate in accordance with requirements of JIS R3206 (Japan Industrial Standards). The constant load applied to the sample 15 is 3KgW and a stroke distance of the reciprocation is 50mm. Reciprocation rate is 60 cycle per minute. Every 2000 times reciprocations 1 milliliter of muddy water is fed to the sample 15. A glass ground by a sandpaper AA100 is employed as the abrasive glass 21.

The following examples will further illustrate the present invention and results of the above-mentioned abrasion tests carried out to evaluate the abrasion resistance of the weatherstrip according to the invention. Each test result is given as an average of measured values obtained on the samples.

EXAMPLE 1

Sample A having a polyolefine resin layer formed by thermal fusion, as conventionally used, was used as a control. Sample B was provided with a layer of a reactive urethane hot melt resin composition "No. 5900" manufactured by Notape, Ind., Co. In the case of Sample A, it was found that the total number of reciprocations reached approximately 4000. In the case of Sample B, it was found that the total number of reciprocations was approximately 2000.

EXAMPLE 2

Sample C having a conventional coating material which includes 100 parts by weight of urethane prepolymer, 10 parts by weight of isocyanate, 20 parts by weight of powdered fluorine-containing polymer and 20 parts by weight of silicone oil, was used as a control. Sample D was provided with a layer of the reactive urethane hot melt resin composition as used in Example 1.

Two other samples were each provided with a layer of reactive urethane hot melt resin material. The material was prepared by mixing the reactive urethane hot melt resin composition "No. 5900" by Notape, Ind., Co., as used in Example 1, with silicone oil and at least a compound selected from fluorine-containing polymer, polyethylene, nylon, silica and molybdenum disulfide in the form of powder. Sample E was provided with 100 parts by weight of the reactive urethane hot melt resin composition mixed with 10 parts by weight of a powdered fluorine-containing polymer "L-169J" by Asahi Glass Co., Ltd. and 5 parts by weight of a silicone oil "TSF451-10M" by Toshiba Silicone Co., Ltd. Sample F is provided with a layer of 100 parts by weight of the reactive urethane hot melt resin composition mixed with 30 parts by weight of the powdered fluorine-containing polymer "L-169J" and 10 parts by weight of the silicone oil "TSF451-10M". In the cases of Samples C to F, it was found than the total number of reciprocations were approximately 2,000, 4,000, 14,000 and 26,500, respectively.

EXAMPLE 3

Sample G was provided with a layer of reactive urethane hot melt resin composition as used in Example 1. Two other samples were each provided with a layer of the reactive urethane hot melt resin composition mixed with fluorine-containing grease which is manufactured by Sumico Lubricant Co., Ltd. The fluorine-containing grease includes perfluoropolyether used as a main component and, if desired, further includes polytetrafluoroethylene (PTFE) used as thickener and benzotriazole, nitrite or the like used as an additive. Namely, Sample H was provided with a layer of 100 parts by weight of reactive urethane hot melt resin composition mixed with 10 parts by weight of the fluorine-containing grease. Sample I was provided with a layer of 100 parts by weight of reactive urethane hot melt resin composition mixed with 20 parts by weight of the fluorine-containing grease.

In the cases of Samples G to I, it was found that the total number of reciprocations were approximately 4,000, 12,500 and 18,000, respectively.

Specifically in Example 3, since the fluorine-containing grease is not chemically changed by heat, water or organic solvents, it was found that the samples have high resistance against a sliding friction generated between the sample and the glass.

**Claims**

1. A weatherstrip comprising a body portion and a layer of a reactive urethane hot melt resin composition.

2. A weatherstrip as set forth in claim 1, wherein said body portion has integral seal members.

3. A weatherstrip as set forth in claim 1, wherein said reactive urethane hot melt resin composition comprises urethane prepolymer containing isocyanate group, and an additive comprising antioxidant and catalyst.

4. A weatherstrip as set forth in claim 3, wherein said additive is present in an amount of 0.1 to 1 parts by weight, on the basis of 100 parts by weight of said urethane prepolymer.

5. A weatherstrip as set forth in claim 3, wherein said additive is present in an amount of 0.1 to 0.2 parts by weight, on the basis of 100 parts by weight of said urethane prepolymer.

6. A weatherstrip as set forth in claim 3, wherein said reactive urethane hot melt resin composition further comprises thermoplastic resin.

7. A weatherstrip as set forth in claim 7, wherein said thermoplastic resin is at least one selected from a group consisting of polyethylene, ethylene vinyl acetate copolymer (EVA), poLyester and polyamide.

8. A weatherstrip as set forth in claim 7, wherein said thermoplastic resin is present in an amount of up to 10 parts by weight, on the basis of 100 parts by weight of said uretane prepolymer.

9. A weatherstrip as set forth in claim 6, wherein said thermoplastic resin is present in an amount of up to 5 parts by weight, on the basis of 100 parts by weight of said uretane prepolymer.

10. A weatherstrip as set forth in claim 3, wherein said reactive urethane hot melt resin composition further comprises powdered fluorine-containing polymer, silicone oil, powdered resin, powdered silica and powdered metal.

11. A weatherstrip as set forth in claim 11, wherein said powdered metal is molybdenum disulfide.

12. A weatherstrip as set forth in claim 3, wherein said reactive urethane hot melt resin composition further comprises fluorine-containing grease.

13. A method of producing a weatherstrip of elastomeric material by an extruder which is provided, at an end portion thereof, with an inner die lip having a first orifice of a predetermined configuration and an outer die lip having a second orifice larger than the first orifice of the inner die lip, said outer die lip having a passage communicating with the second orifice, comprising the steps of:

extruding the elastomeric material through the first orifice of the inner die lip; and

supplying a reactive urethane hot melt resin composition through the passage into the second orifice of the outer die lip and thereby applying same to a predetermined area of the extruded weatherstrip so that a layer of the reactive urethane hot melt resin composition is formed thereon.

# FIG.1

# FIG.2

# FIG.3

# FIG.4

# FIG.5

# FIG.6

Ø20mm

10R